# EUROPEAN PATENT APPLICATION

(11) **EP 2 790 134 A1**
(43) Date of publication of application: **15.10.2014**
(21) Application number: 13163296.0
(22) Date of filing: 11.04.2013
(51) Int. Cl.: G06Q 10/00

(54) **System and method for processing data about user experiences**

(71) Applicant: Zucano S.r.l., 20124 Milano (IT)
(72) Inventor: Turchini, Marco, I-20124 Milano (IT); Malesci, Umberto, I-20124 Milano (IT); Erta, Alessandro, I-20124 Milano (IT)
(74) Representative: Giannesi, Simona

(57) **Abstract**

It is described a system (10) and a method for processing data about user experiences. The system (10) comprises:
- a database (20);
- a social networking media connecting module (60) configured to connect to at least one social networking medium (18) for retrieving information regarding contacts (C) of a user (U) on said at least one social networking medium (18), and to store the retrieved information into said database (20); and
- a booking platform connecting module (40) configured to:
- connect to at least one booking platform (16) for searching options matching predetermined searching criteria;
- show the user (U) retrieved options, if any;
- compare at least one of the retrieved options with information about experiences stored in the database (20) in order to identify user contacts (C) on said at least one social networking medium (18), who planned an experience matching the at least one of the retrieved options; and
- show the user (U) information about the identified user contacts (C), if any.

## Description

### Background of the invention

The present invention generally relates to a system and a method for processing data about user experiences.

Social networking media have become a popular way worldwide for many individuals to socialize with each other. Typically, social networking media allow social network members to create their own online profile with data, pictures, videos and any other information and to communicate with others members by voice, chat, instant messaging, videoconferencing and so on. Therefore, social networking media provide a lot of information about their members.

Moreover, in recent years, an increasing number of people uses on-line booking platforms for booking and/or purchasing different types of tickets, such as tickets for a train journey, an airplane journey, a theatre performance, and a sport event.

When a person travels or attends a performance alone, he is subject to a random process of seatmate selection. Sitting near unknown people is often boring and does not provide a lot of value to travellers on the train or audience of the performance. Moreover, in case of two or more people desiring to plan a train journey together, this results in a complicated task, in that they must exchange a plurality of information, such as date of travel, train number, seat number, etc.

### Summary of the invention

The technical problem underlying the present invention is therefore to provide a user with a tool for fast, efficient, flexible and user friendly search, retrieval, use and sharing of data relating to experiences.

The Applicant found that the above technical problem is solved by a system and a method according to independent claims 1 and 7. In particular, according to the inventive system and method one or more booking platforms are connected to one or more social networking media in order to allow a user to plan an experience by means of booking platform(s) and to share the planned experience with his contacts and/or connections on social networking media.

In the following description and in the claims, the expression "booking platform" is used to indicate an on-line reservation and/or purchasing system. Examples of on-line booking platforms are railway ticket booking systems, airline ticket booking systems, travel websites, theatre ticket booking systems, sport event booking systems, and the like.

In the following description and in the claims, the expression "social networking media" is used to indicate means of interactions among people by which they create, share, and/or exchange information in virtual communities and networks. Examples of social networking media are Internet forums, web blogs, video and photo sharing communities (e.g. YouTube, Flickr, Instagram, etc.), social networks (e.g. Facebook, Twitter, Linkedin, etc), mailing lists, newsgroups, and the like.

In the following description and in the claims, the term "experience" is used to indicate an event a user can live and/or plan. The experience may be effective (e.g. when the user is living or about to live the experience) or planned (e.g. by reservation, purchasing, selection from an online booking platform and/or storing relevant information into a database). Examples of experiences are a train journey, a flight, a concert, a theatre performance, a sport event, a pleasure or business trip, a stay at a resort, and the like.

In the following description and in the claims, the term "option" is used to indicate a possible experience provided by a booking platform which can be chosen by the user. Examples of options are a train journey provided by a railway ticket booking system, a flight provided by an airline ticket booking system, a theatre performance provided by a theatre ticket booking system, a stay at a resort provided by a travel website, a sport event provided by a sport event booking system, and the like.

In a first aspect, the present invention relates to a system for processing data about user experiences comprising:
- a database;
- a social networking media connecting module configured to connect to at least one social networking medium for retrieving information regarding contacts of a user on said at least one social networking medium, and to store the retrieved information into said database; and

- a booking platform connecting module configured to:
   - connect to at least one booking platform for searching options matching predetermined searching criteria;
   - show the user retrieved options, if any;
   - compare at least one of the retrieved options with information about experiences stored in the database in order to identify user contacts on said at least one social networking medium, who planned an experience matching the at least one of the retrieved options; and
   - show the user information about the identified user contacts, if any.

In a second aspect, the present invention relates to a method for processing data about user experiences, comprising:
- connecting to at least one social networking medium for retrieving information about contacts of the user on said at least social networking medium, and storing the retrieved information into a database; and
upon a user access command:
- connecting to at least one booking platform for searching options matching predetermined searching criteria;
- showing the user retrieved options, if any;
- comparing at least one of the retrieved options with information about experiences stored in the database in order to identify user contacts on said at least one social networking medium, who planned an experience matching the at least one of the retrieved options; and
- showing the user information about the identified user contacts, if any.

In a further aspect the present invention relates to a computer program comprising software code configured to perform the method of the present invention.

In a further aspect the present invention relates to a computer readable storage medium comprising said computer program.

The dependent claims refer to particularly advantageous embodiments of the invention.

The present invention in at least one of the aforementioned aspects can have at least one of the following preferred characteristics.

In a preferred embodiment, the method is a computer-implemented method.

Preferably, the computer readable storage medium is non-transitory.

Preferably, said predetermined searching criteria are selected from the group comprising: searching criteria entered by the user accessing the system; current position and time associated with the user; and current position, time and motion condition associated with the user.

Preferably, the predetermined searching criteria entered by the user comprise information about date and/or place of an experience. For example, the information comprises departure point, destination point, departure date and/or departure hour of a journey; or title, date and/or hour of a performance.

Preferably, the system further comprises a position identifying unit configured to determine said current position and optionally said motion condition associated with the user. More preferably, said position identifying unit is configured to make said determination in cooperation with a mobile device used by the user to access the system.

Preferably, the social networking media connecting module is further configured to connect to said at least one social networking medium to enable the user to share experiences with his contacts on said at least one social networking medium.

Preferably, the booking platform connecting module comprises a plurality of connecting units, each being configured to connect to a respective booking platform.

Preferably, said social networking media connecting module comprises a plurality of connecting units, each being configured to connect to a respective social networking media.

Preferably, said booking platform connecting module further comprises at least one two-layers authentication unit, configured to connect a respective booking platform to the system, and the system to said at least one social networking medium, thereby creating a tunnel between the booking platform and said at least one social networking medium.

Preferably, said social networking media connecting module further comprises an identity management unit configured to: create a Top Level Identity for the user; associate different Social Network Identities used by the user for accessing the system with the Top Level Identity; and store into the database the Top Level Identity with the Social Network Identities associated thereto.

Preferably, the Top Level Identity is a user identifier created by the system while the Social Network Identities are identifiers used by the user for accessing the social networking media.

Preferably, said social networking media connecting module further comprises a normalizing unit configured to convert information data which are received from each social networking medium according to a specific Application Processing Interface into information data normalized according to a common proprietary standard.

Preferably, the user experience is a user journey and the system further comprises a geographic analysing unit configured to associate the user journey with journeys of user contacts having a departure point, a destination point and/or at least one intermediate point in common with the user journey.

The system preferably further comprises a reporting unit configured to provide said at least one booking platform with information about the behaviour of the users towards experiences, based on the user information stored in said database.

Preferably, the method further comprises:
- receiving from the user a selection command for selecting one of said shown retrieved options; and
- connecting to said at least one social networking medium to enable the user to share with his contacts on said at least one social networking medium the selected option as an experience.

Preferably, the method comprises:
- receiving from the user a selection command for selecting one of said shown retrieved options, and
   connecting to the relevant booking platform to enable the user to plan (e.g. by ticket reservation or purchasing) an experience corresponding to the selected retrieved option.

Preferably, said predetermined searching criteria are received from the user, the comparing is performed on all the retrieved options, if any, and said all retrieved options are shown to the user together with the information about the identified user contacts, if any.

Preferably, said predetermined searching criteria are current position and time or current position, time and motion condition associated with the user; the comparing is performed on one of the retrieved option selected by the user; and information about the identified user contacts associated with said selected retrieved option, if any, is shown to the user.

Preferably, said one of the retrieved option selected by the user is an experience the user U is living or is going to live shortly.

Preferably, the user is shown options comprised within a predetermined time window.

Preferably, the current position or the current position and the motion condition associated with the user are determined in cooperation with a mobile device used by the user to enter the access command.

Preferably, the user access command is received through one of the booking platform and a tunnel is created between the booking platform and said at least one social networking medium.

Preferably, the method further comprises:
- receiving a Social Network Identity upon said access user command;
- determining if the received Social Network Identity is already associated with a Top Level Identity in the database;
- in the negative case, determining if a Top Level Identity is already associated with the user in the database;
   - in the affirmative case, associating the received Social Network Identity with the Top Level Identity already associated with the user in the database;
   - in the negative case, creating a Top Level Identity for the user and associating it with the received Social Network Identity.

Preferably, in any of the above mentioned cases, the retrieved information about user contacts on said at least social networking media is stored into the database in association with the user Top Level Identity.

Preferably, the user experience is a journey, the predetermined searching criteria are entered by the user and comprise a departure point and a destination point of the journey, and the method comprises:
- comparing the departure and destination points of the journey with the departure, destination and potential intermediate points of mother routes, if any, stored in the database;
- determining whether the journey has at least one point in common with the departure, destination and intermediate points of the mother routes;
- in the negative case, identifying and storing within the database the journey as a new mother route;
- in the affirmative case, asking the user if the journey is on one of the mother routes identified at the determining step;
   - in the negative case, identifying and storing within the database the journey as a new mother route;
   - in the affirmative case, identifying the journey as a daughter route of the identified mother route and storing it within the database.

Preferably, if the journey is on one of the mother routes identified at the determining step, the method further comprises:
- selecting the mother route on which the journey is positioned;
- asking the user if the departure point or destination point of the journey is external to the selected mother route;
- in the affirmative case:
- if the external point of the journey is the departure point, identifying and storing within the database the departure point of the journey as new departure point of the selected mother route;
- if the external point of the journey is the destination point, identifying and storing within the database the destination point of the journey as new destination point of the selected mother route.

Preferably, for each mother route stored in the database, the method comprises:
- determining a theoretical beeline connecting the departure point and the destination point of the mother route;
- determining an area of divergence from the theoretical beeline;
- determining potential intermediate points on the mother route within the area of divergence from the theoretical beeline; and
- categorizing and storing in the database each determined potential intermediate point as a potential intermediate point on the mother route.

### Brief description of the drawings

Additional features and advantages of the invention will be better apparent from the following description of preferred embodiments of a system and a method according to the present invention, which description is provided hereinafter for exemplifying and non-limiting purposes, with reference to the attached drawings. In the drawings:
- Figure 1 is a schematic representation of a system according to an illustrative embodiment of the invention;
- Figure 2 is a block diagram illustrating more in detail different components of the system of Figure 1;
- Figure 3 is a block diagram which schematically illustrates a two-layers authentication procedure of the system of Figures 1 and 2;
- Figure 4 is a flowchart schematically showing the steps of a method according to an embodiment of the present invention;
- Figure 5 is a flowchart schematically showing the steps of a method according to a further embodiment of the present invention; and
- Figure 6 is a flowchart schematically showing the steps of a procedure of hierarchical association of routes according to an embodiment of the method of the present invention.

### Detailed description of preferred embodiments of the invention

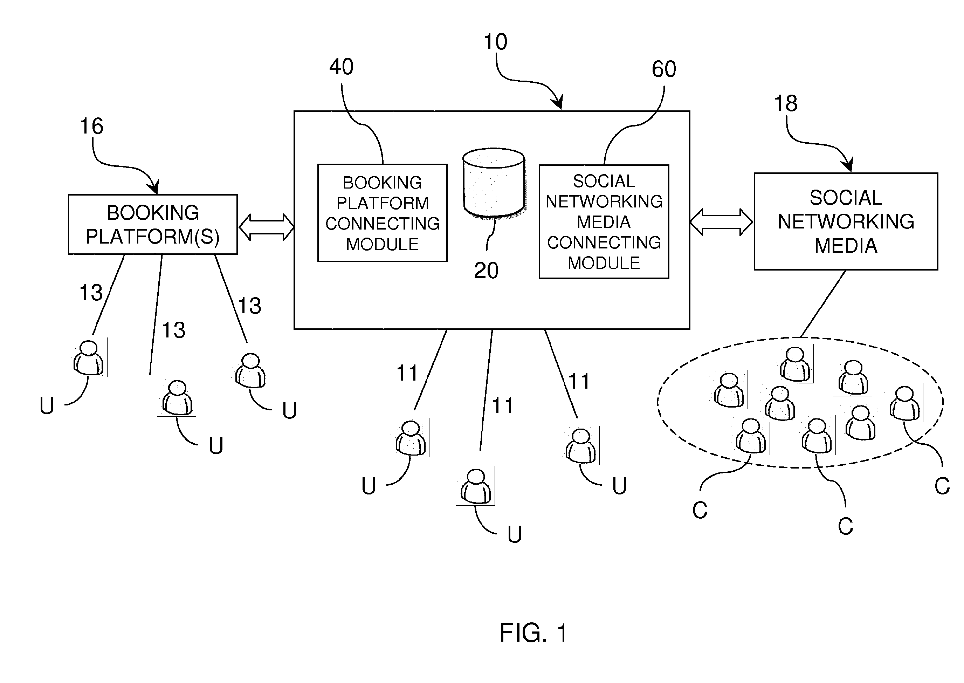

With reference to Figures 1 to 3, it is schematically illustrated a system 10 according to an illustrative embodiment of the present invention.

The system 10 is configured to connect at least one booking platform 16 to N social networking media 18 (with N integer ≥ 1) in order to allow any number of users U acceding the system 10 to plan an experience, e.g. to book a flight on an airline booking platform 16, based on predetermined searching criteria, and to share the planned experience with his contacts C on the social networking media 18.

Advantageously, the inventive system 10 is configured to be accessed by more users U simultaneously.

Each user U accesses the system 10 either directly, through a communication link 11, or by first accessing one of the booking platforms 16, by means of a communication link 13, as will be described in detail in the following of the present specification.

The communication links 11 and 13 are, for example, a wired connection, a wireless connection or a combination thereof, established between a computer-based device (not shown) of the user U and the system 10. Examples of computer-based devices that users U may use to access the system 10 are, for example, personal computers, laptops, notebooks, tablets, smart phones and the like, that are generally capable of accessing the Internet.

The inventive system 10 comprises a database 20, a booking platform connecting module 40 and a social networking media connecting module 60.

The database 20, the booking platform connecting module 40 and the social networking media connecting module 60 comprise hardware and/or software and/or firmware configured to perform the method of the present disclosure.

The database 20 is configured to store, for each user U, identifying data (e.g. Social Network Identity data), data about his experiences and information related to his contacts C on social networking media. For example, any time a user U accesses the system 10 through the communication link 11 or 13, the system 10 stores in the database 20 information related to his contacts C on social networking media 18. In addition, any time a user plans an experience, the system 10 stores in the database 20 information about the planned experience (e.g. in the case of a flight, date and hour of the flight, number of the flight, number of the seat, and the like). In addition, the database 20 is configured to store data about mother/daughter routes, as explained more in detail below.

The booking platform connecting module 40 is configured to:
- connect to the booking platform(s) 16 for retrieving one or more options, if any, matching predetermined searching criteria;
- show the user U the retrieved options;
- compare at least one of the retrieved options with experiences stored in the database 20 in order to identify user contacts C on social networking media 18 who planned an experience matching the at least one of the retrieved options; and
- show the user U information about the identified user contact(s) C.

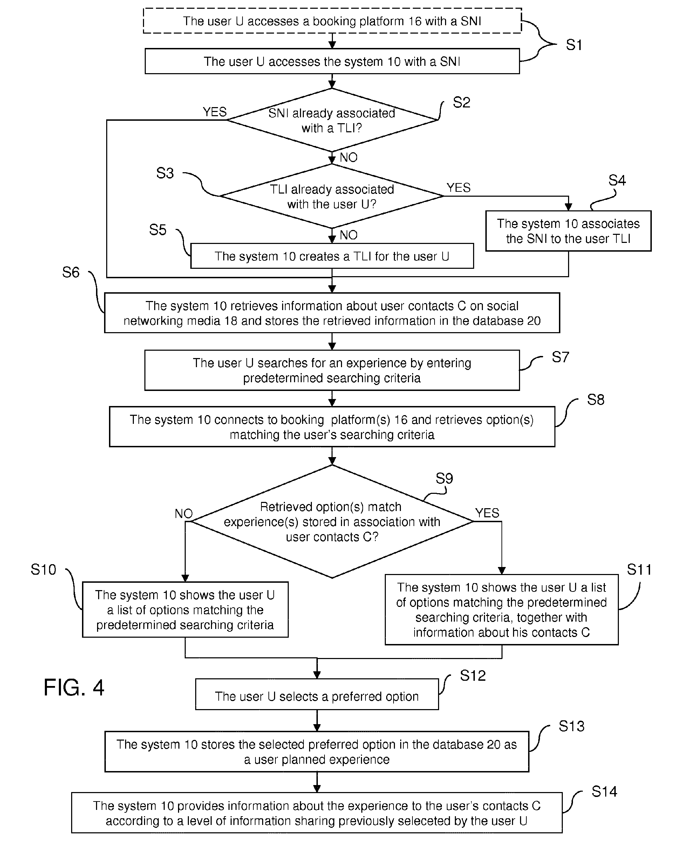

Preferably, as exemplarily explained more in detail below with reference to Figure 4, the predetermined searching criteria are selected by the user U and comprise, for example, departure point, destination point, departure data and/or departure hour of a journey; title, date and/or hour of a theatre performance. It is however understood that the above user searching criteria are illustrative and not limitative and that the user U, based on the searched experience, can select other suitable searching criteria.

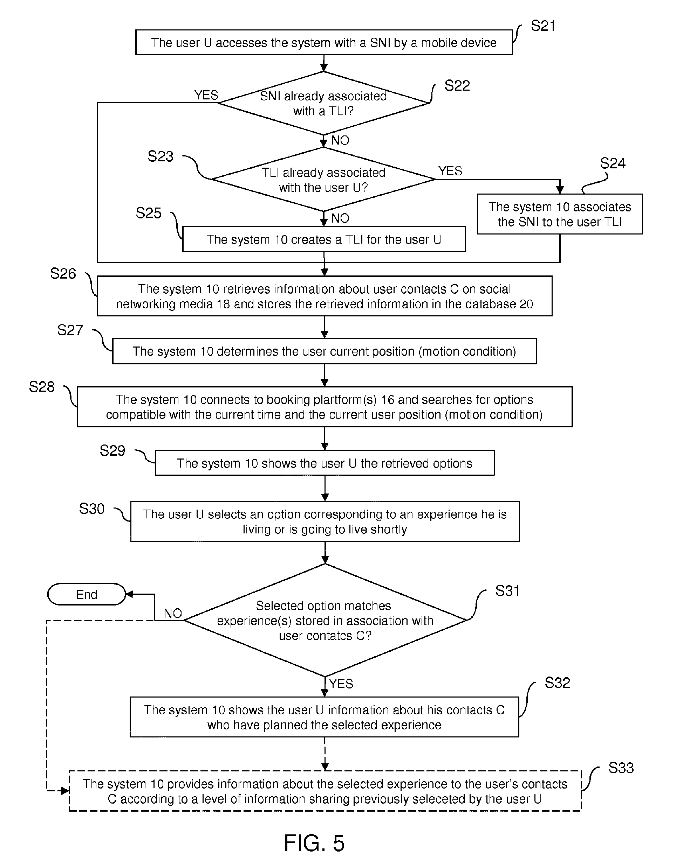

Alternatively or in addition, as exemplarily explained more in detail below with reference to Figure 5, the predetermined searching criteria can comprise current time, user position and, preferably, motion condition (e.g. stationary or moving condition, speed and direction of movement).

The social networking media connecting module 60 is configured to connect the system 10 to social networking media 18 for retrieving information regarding user's contacts C on social networking media 18 and, preferably, for sharing the planned experience(s) with such contacts C, based on sharing criteria selected by the user U.

The system 10 can connect to social networking media 18 periodically in background and/or when the user U accesses the system 10 (e.g. at every user access as exemplarily shown in Figure 4 or every x user accesses, with x integer > 1).

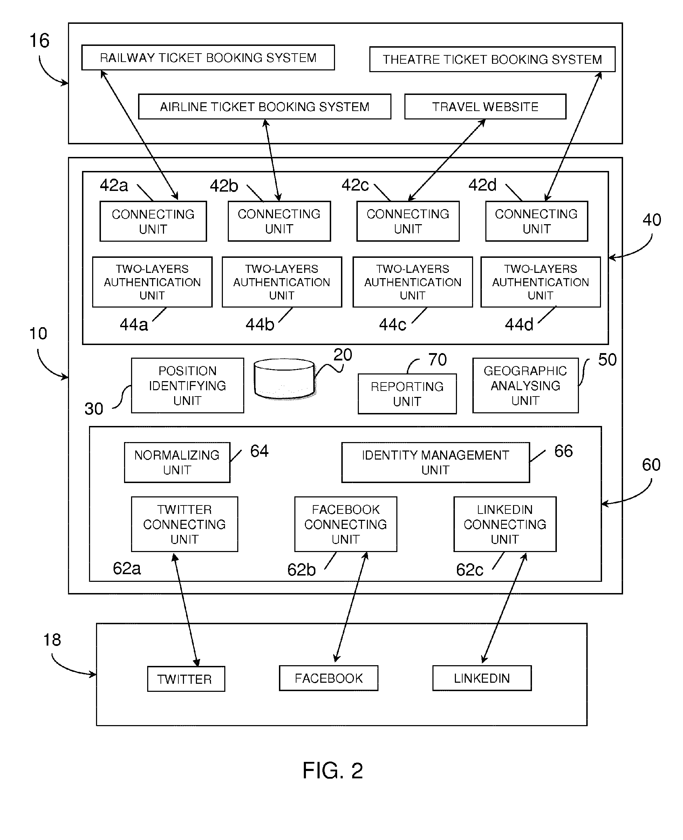

With particular reference to Figure 2, the booking platform connecting module 40 preferably comprises a plurality of connecting units 42a, 42b, 42c, 42d, each being configured to connect to a respective booking platform 16.

In the embodiment shown in Figure 2, the connecting unit 42a is configured to connect to a railway ticket booking system and to receive therefrom at least one option relating to a train journey matching the predetermined searching criteria; the connecting unit 42b is configured to connect to an airline ticket booking system and to receive therefrom at least one option relating to a flight matching the predetermined searching criteria; the connecting unit 42c is configured to connect to a travel website and to receive therefrom at least one option relating to a travel matching the predetermined searching criteria; and the connecting unit 42d is configured to connect to a theatre ticket booking system and to receive therefrom at least one option relating to a theatre performance matching the predetermined searching criteria.

As described above, the user U accesses the system 10 either directly, through the communication link 11, or by first accessing a booking platform 16, for example a railway ticket booking system, by means of the communication link 13.

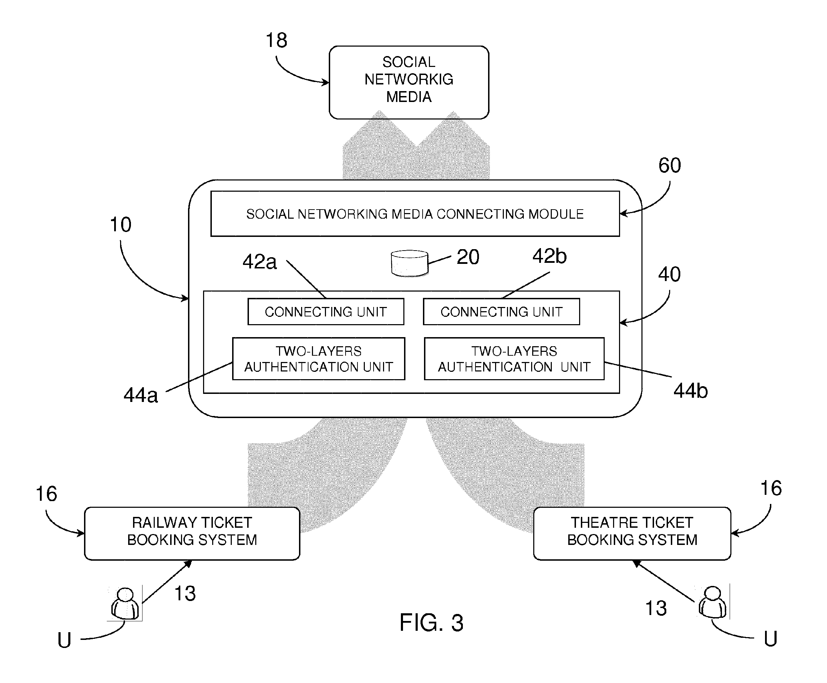

In the latter case, the system 10 carries out a two-layers authentication procedure. Specifically, and with reference in particular to Figures 2 and 3, the booking platform connecting module 40 preferably comprises a plurality of two-layers authentication units 44a, 44b, 44c, 44d, each being configured to connect a respective booking platform 16 to the system 10. Preferably, each two-layers authentication unit 44a-44d is associated with a widget provided in the respective booking platform 16 and is configured to create a "tunnel" (see grey arrows in Figure 3) from the booking platforms 16 towards the system 10, and from the system 10 towards social networking media 18.

This advantageously allows to reduce the number of links among the system 10, the social networking media 18 and the booking platforms 16 and to collect and use data coming from different booking platforms 16 in a centralized and merged manner. The system 10 is thus advantageously enabled to provide the users (accessing the system 10 either directly or through a specific booking platform 16) with options coming from a plurality of booking platforms considered as a whole. The system 10 is also advantageously enabled to provide each booking platform 16 with information about user behaviours (e.g. travelling behaviours) gathered through a plurality of booking platforms 16 and social networking media 18.

Referring back to Figures 1 and 2, the social networking media connecting module 60 is configured to connect to social networking media 18 for retrieving data relating to user contacts C on social networking media 18 and for allowing the user U to share the planned experiences with his contacts C on the social networking media 18.

With particular reference to Figure 2, the social networking media connecting module 60 preferably comprises a plurality of connecting units 62a, 62b, 62c, each being adapted to connect to a respective social networking media 18. Namely, the social networking media connecting units 62a, 62b, 62c comprise: a Twitter connecting unit 62a configured to connect to Twitter for retrieving information about Twitter contacts C of the user U and for allowing the user U to share the planned experience(s) with his Twitter contacts C; a Facebook connecting unit 62b configured to connect to Facebook for retrieving information about Facebook contacts C of the user U and for allowing the user U to share the planned experience(s) with his Facebook contacts C; and a Linkedin connecting unit 62c configured to connect to Linkedin for retrieving information about Linkedin contacts C of the user U and for allowing the user U to share the planned experience(s) with his Linkedin contacts C. It is however understood that the above social networking media are illustrative and not limitative and that the inventive system and method also apply to other known social networking media.

The social networking media connecting module 60 further comprises a normalizing unit 64 configured to "normalize" or "standardize", according to a common proprietary standard, information data entering the related connecting unit 62a, 62b, 62c from the corresponding social networking medium 18.

As it is known, every social networking medium 18 transmits data according to its own specific API (Application Processing Interface) and restrictions. In other words, each social networking medium 18 stores data fields using different identifiers. For example, a social networking medium 18 may store the user identity in a field labelled "user" and another social networking medium may store the same information in a field labelled "userlD" and still another social networking medium may use the label "username".

Thus the normalizing unit 64 effectively standardizes heterogeneous data fields coming from the plurality of social networking media 18 according to the proprietary standard. In the present embodiment, data relating to the contacts C, received from social networking media 18 according to their specific APIs, are converted into data normalized according to the proprietary standard.

Preferably, the user U can share the planned experiences on social networking media according to one of a plurality of notification techniques comprising a public post, a private message, a tag, and the like.

Further preferably, the user U can decide to share the experiences according to a desired level of sharing and to set his privacy policy. For example, there can be three main levels of sharing: date and destination/location of the experience; date, destination/location and time of the experience; and date, destination/location, time and seat number of the experience.

By way of an illustrative example, it is assumed that the planned experience is a flight. If the user U selects the first level of sharing, he will share with his contacts C date and city of destination of the flight; if the user U selects the second level of sharing, he will share with his contacts C date, city of destination and time of the flight; and if the user U selects the third level of sharing, he will share with his contacts C date, city of destination, time of the flight and number of the seat and/or the class of the flight (e.g. business class, economy class, etc.) where the seat is located.

Preferably, the user U can further decide to share each level of information with a selected number of contacts C. In other words, the user U can group his contacts C in white or black lists with the aim of providing access or denying access to different levels of sharing. For example, the user U might decide to share the first level of sharing, i.e. date and destination/location of the experience, with all his contacts C through a public post, but he could also decide to share the second level of sharing, i.e. date, destination/location and time of the experience, by means of a private message only with a white list containing a subset of selected contacts C.

The user selection in terms of sharing and privacy can be done on an experience-by-experience level, but the user U can also define default parameters for each experience he decides to plan in future.

Preferably, as explained more in detail below with reference to figures 4 and 5, the social networking media connecting module 60 further comprises an identity management unit 66 configured to:
- create, starting from a Social Network Identity (SNI) of a user U accessing the system 10 for the first time, a so-called Top Level Identity (TLI) associated with the user U;
- associate different SNIs used by the same user for subsequently accessing the system 10 with the TLI so created; and
- store into the database 20 the TLI with the different SNIs associated thereto.

In order to merge different SNIs into a single TLI, the system 10 exploits a plurality of indicators, such as, for example, same mail addresses associated with different SNIs; number of contacts C in common, preferably with same associated contact details (email, telephone number, etc.); and same socio-demographic indicators (e.g. date of birth, city of residence, etc.).

Considering that a user U can use different SNIs to access the system 10 (e.g. different SNIs associated with different social networking media 18), the creation of the TLI can be very useful to correctly identify the user U irrespectively of the SNI each time used to access the system 10.

This advantageously allows the system 10 to be consistent in identifying the user U and his contacts C and to correctly share the experiences on social networking media 18. In fact, since the privacy settings (level of sharing and mode of notification) are very granular and allow the user U to select which experience details can be shared with his contacts C or group of contacts C, inconsistencies are not desired. Therefore, managing relations on TLI level advantageously allows to correctly distinguish, for example, contacts C included in a white list from contacts C included in a black list.

The social networking media connecting module 60 is configured to connect to the social networking media 18 by using the respective SNIs. In particular, and referring to Figure 2, each connecting unit 62a, 62b, 62c is adapted to connect to a respective social networking medium 18 by using the respective SNI.

Preferably, the system 10 further comprises a position identifying unit 30 configured to determine the current user position and, preferably, the user motion condition (such as stationary or moving condition, speed and direction of movement).

Preferably, as explained more in detail below with reference to Figure 5, the system 10, based on current time and the determined current user position and, preferably, motion condition, is configured to:
- determine if there are options compatible with the current user position, the current time and, preferably, the motion condition;
- provide the user U with the determined compatible options, if any;
- allow the user U to select an option of the determined compatible options that corresponds to an experience the user is living or is going to live in a short time (e.g. within 60 minutes);
- show the user U his contacts C on social networking media 18 who planned an experience matching the selected option; and
- preferably, allow the user U to share the experience with his contacts C on social networking media 18.

The step of determining compatible options can be performed by taking into account estimations of hypothetical positions of transportation means based on historical data collected by the system 10 and/or obtained by timetable schedules.

Preferably, the system 10 provides the user U with the determined compatible options within a predetermined time window, for example a 60 minute time window. The time window can start from the current time or comprise the current time, for example in order to take into account possible delayed departures.

This embodiment with the position identifying unit 30 can be useful when the user U accesses the system 10 by means of a mobile device (not shown), such as for example a smart phone, a laptop, a tablet and the like. In fact, in order to determine the current user position and, preferably, motion condition, the position identifying unit 30 of the system 10 can exploit data coming from GPS (Global Positioning System) or wi-fi based localization systems generally embedded in the above listed mobile devices.

Thanks to the position identifying unit 30, the inventive system 10 is able to show the user U only options compatible with current time, current user position and, preferably, current motion condition.

This provides a fast, efficient and user friendly tool for enabling the user U to quickly identify an experience he is living or going to live shortly and to share it with his contacts C.

For example, the system 10 can determine that the user U is near or at a specific train station. This advantageously allows the system 10 to provide the user U only with options about train journeys departing from that train station, preferably within the predetermined time window. Moreover, the system 10 can determine that the user U is nearby Milan and travelling southward. This advantageously allows the system 10 to show the user U only train journeys passing nearby Milan, travelling southward, preferably within the predetermined time window. The user U can thus select the train journey corresponding to the experience he is living or is going to live shortly, to get information about any contacts C associated with the same experience and share it with his contacts C on social networking media 18.

It is now assumed, for example, that a user U desires to plan and share a journey from a departure point to a destination point and that a contact C of the user U has planned a journey having the same departure point but a destination point different from that of the journey planned by user U, or having a different departure point but the same destination point of the journey planned by user U, or having at least one intermediate point, between the departure and destination points, in common with the journey planned by user U.

In these cases, since the user journey and the contact journey are different in terms of departure and destination points, they could be considered as different journeys and therefore not shown as possible matching journeys.

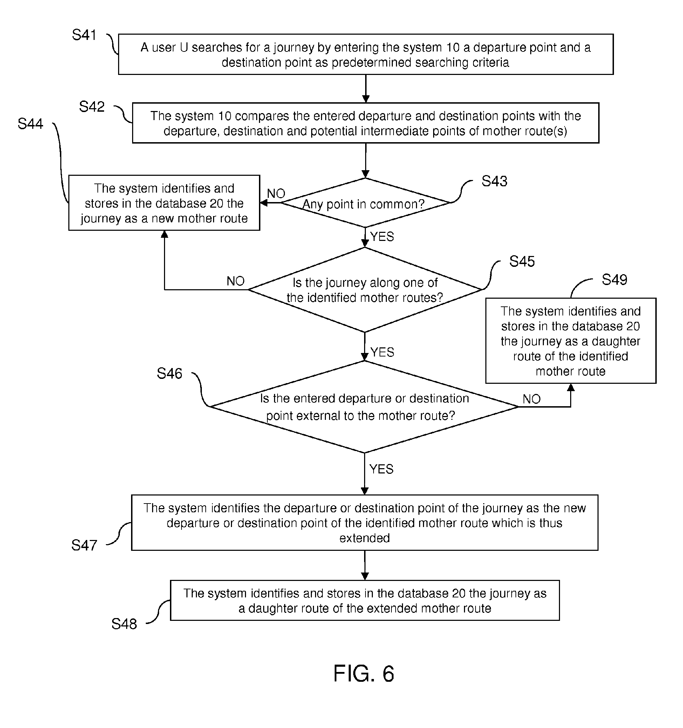

As explained more in detail below with reference to Figure 6, in order to solve this problem, the system 10 preferably further comprises a geographic analysing unit 50 configured to hierarchically associate the user journey with all possible contact journeys having a departure point, a destination point and/or at least one intermediate point in common with the user journey. This advantageously allows the system 10 to suggest possible matches among journeys having different departure and/or destination points.

Preferably, the system 10 further comprises a reporting unit 70 configured to provide the booking platforms 16 with information about the behaviour of the users U of the system 10, based on the user information stored in the database 20. For example, the reporting unit 70 is configured to provide an airline ticket booking system information about user preferred means of transport, preferred destinations, numbers of journey, average stays in a journey, reasons of journey, and the like. These information data have a great value in that they are obtained from different sources considered as a whole (e.g. railway ticket booking systems, airline ticket booking systems, travel websites, theatre ticket booking systems) and not from a single booking platform 18.

Referring now to Figure 4, a flowchart is shown of an embodiment of the method of the present disclosure that can be executed by the system 10 of Figures 1 to 3.

The method begins at step S1, where a user U accesses the system 10 by means of a respective computer-based device, e.g. a personal computer, a laptop, a notebook, a tablet, a smart phone and the like.

As described above, the user U can access the system 10 either directly (block in continuous line) or by a previous access to a booking platform 16 (block in dashed line), by means of a SNI. In the latter case, the user U accesses the booking platform 16 and then accesses the system 10, for example by clicking on a widget provided on the booking platform 16. Owing to this two-layers authentication procedure, a "tunnel" is created from each booking platform 16 to the system 10, and from the system 10 to each social networking medium 18, which "tunnel" allows the user U to access the system 10, and thus the social networking medium 18, by simply accessing the booking platform 16.

From step S1, the method advances to step S2, where the system 10, namely the identity management unit 66 of the social networking media connecting module 60, determines if the SNI used by the user U to access the system 10 is already associated with a TLI in the database 20.

If the SNI is already associated with a TLI (YES), the method proceeds to step S6, where the system 10, namely the social networking media connecting module 60, connects to at least one social networking medium 18 to retrieve information about the user contacts C and stores the retrieved information in the database 20 in association with the user TLI.

If the SNI is not already associated with a TLI (NO), the method proceeds to step S3.

At step S3, the identity management unit 66 determines if the user U has previously accessed the system 10 with a different SNI already associated in the database 20 with a TLI, i.e. if a TLI is already associated with the user U. Such a determination is preferably performed, as explained above, based on a plurality of indicators comprising: same e-mail addresses associated with different Social Network Identities SNIs, a great number of contacts in common, preferably with same associated contact details (e-mail, telephone number, etc), and same social-demographic indicators (date of birth, city of residence, etc.).

In the affirmative case (YES), the method proceeds to step S4, where the identity management unit 66 associates, into the database 20, the SNI currently used by the user U to access the system 10 with the user TLI, and to step S6.

If the negative case (NO), the method proceeds to step S5, where the identity management unit 66 creates a TLI for the user U and associates it into the database 20 with the SNI currently used by the user to access the system 10. Then the method proceeds to step S6.

From step S6, the method proceeds to step S7, where the user U searches for an experience by entering predetermined searching criteria, such as for example departure and destination points and date of a train or airplane journey; or title and date of a theatre performance, and similar.

From step S7, the method proceeds to step S8, where the system 10, namely the booking platform connecting module 60, connects to at least one booking platform 16 and retrieves options, if any, matching the user predetermined searching criteria.

From step S8, the method proceeds to step S9, where the system 10 determines if there are option(s) retrieved from the booking platform(s) 16 matching experience(s), which are stored in the database 20 in association with user contacts C on social networking media 18.

If a match is not found (NO), the method proceeds to step S10, where the system 10 shows the user U a list of options matching the user predetermined searching criteria.

If the match is found (YES), the method proceeds to step S11, where the system 10 shows the user U a list of options matching the user predetermined searching criteria, together with information about his contacts C.

From steps S10 and S11, the method proceeds to step S12, where the user U selects a preferred option, and to step S13, where the system 10 stores the selected preferred option in the database 20, in association with the user TLI, as a user planned experience.

Preferably, at step S12 the system 10 will enable the user U to plan (e.g. by ticket reservation or purchasing) an experience corresponding to the selected preferred option, in cooperation with the relevant booking platform 16.

From step S13, preferably the method proceeds to step S14, where the social networking media connecting module 60 connects to social networking media 18 to share information about the user planned experience with user contacts C, based on specific sharing levels and sharing techniques previously selected by the user U.

As described above, the user U could decide to share experiences according, for example, to three main levels of information: date and destination/location of the experience; date, destination/location and time of the experience; and date, destination/location, time and seat number of the experience. Moreover, the user U can decide to share his experiences on social networking media by means of a public post on the contact wall, a private message or he can decide to tag a contact C onto common experiences.

Referring now to Figure 5, a flowchart is shown of an embodiment of the method of the present disclosure that can be executed by the system 10 of Figures 1 to 3 in cooperation with a mobile device provided with a GPS (Global Positioning System) or wi-fi based localization system.

The method begins at step S21, where the user U accesses the system 10 by means of a SNI by using a mobile device equipped with internet connection. Also in this case, the user U can access the system 10 either directly or by a previous access to a booking platform 16.

From step S21, the method proceeds to step S22. Steps from S22 to S26 are similar to steps S1-S6 of figure 4. Reference is thus made to what already disclosed above.

From step 26, the method proceeds to step S27, where the system 10, namely the position identifying unit 30 thereof, determines the current position and, preferably, a motion condition of the user U in cooperation with the GPS or wi-fi based localization systems embedded in the user mobile device.

From step S27, the method proceeds to step S28, where the system 10, namely the booking platform connecting module 60, connects to at least one booking platform 16 and searches for options, if any, compatible with the current time and the current user position and, preferably, motion condition.

From step S28 the method proceeds to step S29, where the system 10 shows the user U the retrieved options, if any, and to step S30, where the user U selects an option that corresponds to an experience the user U is living or is going to live shortly.

Preferably, at step S29 the system 10 shows the user U only the retrieved options within a predetermined time window, for example a 60 minute time window.

From step S30, the method proceeds to step S31, where the system 10 determines if the option selected by the user U matches experiences, which are stored in the database 20 in association with user contacts C on social networking media 18.

If a match is found (YES), the method proceeds to step S32, where the system 10 shows the user U information about his contacts C who have planned the selected experience.

If a match is not found, (NO), the method can end or, as shown in the preferred embodiment of Figure 5, advances to step S33.

As described above, the user U could decide to share the selected experience with his contacts C, based on sharing levels and sharing techniques previously selected. To this end, in the negative case of S31 and from step S32, preferably the method proceeds to step S33, where the social networking media connecting module 60 connects to social networking media 18 to share with user contacts C information about the experience the user is living or is going to live shortly.

It is noted that even if not shown the method also could contemplate the case wherein, between steps S29 and S30, the user U enters predetermined searching criteria, for example the destination of a train journey, for limiting the options shown at step S29 so that the system 10 shows the user U only the options matching the entered predetermined searching criteria.

As explained above, and with reference in particular to journeys, for example train journeys, it is desirable to assure consistency among journeys having a departure point, a destination point and/or intermediate points in common.

The inventive method further comprises the following procedure of hierarchical association of mother and daughter routes.

This procedure advantageously enables the system 10 to check any possible match between a journey entered by the user U and mother/daughter routes already stored in the database 20 in order to provide the user U with reliable and full information about contacts C associated with joint experiences (that is, with experiences that have a route in common with the user journey).

In addition, this procedure advantageously enables the system 10 to perform an auto-learning process wherein the mother/daughter routes stored in the database 20 are continuously updated.

The procedure is based on the assumption that, for each mother route, identified and stored in the database 20 as explained below, the system 10, namely the geographic analysing unit 50, determines: a theoretical beeline connecting the departure point and the destination point of the mother route; an area of divergence from the theoretical beeline; and potential points on the mother route within the area of divergence from the theoretical beeline. The system 10 also categorizes and stores in the database 20 each determined potential point as a potential intermediate point on the mother route.

Preferably, the procedure comprises the following steps.

At step S41 a user U searches for a journey by entering the system 10 a departure point and a destination point as predetermined searching criteria.

From step S41, the procedure advances to step S42, wherein the geographic analysing unit 50 compares the entered departure and destination points with the departure, destination and potential intermediate points of mother routes, if any, stored in the database 20.

From step S42, the procedure advances to step S43, where the geographic analysing unit 50 determines whether the journey has at least one point in common with the departure, destination and potential intermediate points of the mother route(s).

If there are no points in common (NO), the procedure advances to step S44, where the system 10 identifies and stores within the database 20 the journey as a new mother route.

If there is at least a point in common (YES), the procedure advances to step S45, where the system 10 asks the user U if the journey is along one of the mother routes identified at step S43.

In the negative case (NO), the procedure advances to step S44.

In the affirmative case (YES), the procedure advances to step S46, where the system 10 asks the user U if the entered departure point or destination point is external to the identified mother route.

If the departure or destination point is external to the mother route (YES), the procedure advances to step S47, where:
- if the external point of the journey is the departure point, the system 10 identifies and stores within the database 20 the departure point of the journey as new departure point of the mother route, which is an extension of the identified mother route, i.e. an extended mother route;
- if the external point of the journey is the destination point, the system 10 identifies and stores within the database 20 the destination point of the journey as new destination point of the mother route, which is an extension of the identified mother route, i.e. an extended mother route.

Then the procedure advances to step S48, where the system 10 identifies the journey as a daughter route of the extended mother route and stores it within the database 20.

If the departure point is not external to the mother route (NO), the procedure advances to step S49, where the system 10 identifies and stores within the database 20 the journey as a daughter route of the identified mother route.

The above described procedure of hierarchical association of mother and daughter routes advantageously is an auto-learning process. Therefore, it will be more intense at the beginning of the operation of the system 10 and will naturally decrease in intensity with time.

Clearly, a man skilled in the art may introduce modifications and variants to the invention described hereinbefore in order to meet specific and contingent application requirements, variants and modifications which anyway fall within the scope of protection as defined in the attached claims.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

For example, based on information about user experiences and contacts collected and stored in the database, the system could be used for: creating and showing the user a map relating to the seats occupied by his contacts in a train, airplane or at theatre, thus allowing the user to select his seat near to a friend; suggesting the user new contacts on social networking media and/or experiences similar to those planned by the user and his contacts; and creating and showing the user a travel diary, where he can found all information about planned experiences (e.g., in case of a journey, hotel address, flight time, gate, and the like).

From the above description it will be clear that the present disclosure enables to achieve the following advantages:
- to provide a user with a tool for fast, efficient, flexible and user friendly search, retrieval, use and sharing of data relating to experiences;
- in a mobile device application, to enable the user to immediately identify the experience he is living or going to live shortly and to share it with his contacts on social networking media;
- to allow a user to efficiently plan one or more experiences based on experiences already planned by his own contacts on social networking media as well as to inform relevant contacts about his own planned experiences, without it being necessary to exchange a lot of information, such as for example, date of travel, train number, seat number, etc...;
- to reduce the number of links among the system, the social networking media and the booking platforms and to collect and use data coming from different booking platforms in a centralized manner, thus providing the user accessing the system with options coming from a plurality of booking platforms considered as a whole and each booking platform with information about user behaviours (e.g. travelling behaviours) gathered through a plurality of booking platforms and social networking media;
- to consistently identify the user and his contacts and to properly share the user experiences on social networking media;
- to check any possible match between a journey entered by the user and mother/daughter routes already stored in the database in order to provide the user with reliable and full information about contacts associated with joint experiences (that is, with experiences that have a route in common with the user journey).

## Claims

1. A system (10) for processing data about user experiences comprising:
- a database (20);
- a social networking media connecting module (60) configured to connect to at least one social networking medium (18) for retrieving information regarding contacts (C) of a user (U) on said at least one social networking medium (18), and to store the retrieved information into said database (20); and
- a booking platform connecting module (40) configured to:
- connect to at least one booking platform (16) for searching options matching predetermined searching criteria;
- show the user (U) retrieved options, if any;
- compare at least one of the retrieved options with information about experiences stored in the database (20) in order to identify user contacts (C) on said at least one social networking medium (18), who planned an experience matching the at least one of the retrieved options; and
- show the user (U) information about the identified user contacts (C), if any.

2. A system (10) according to claim 1, wherein said predetermined searching criteria are selected from the group comprising: searching criteria entered by the user (U) accessing the system (10); current position and time associated with the user (U); and current position, time and motion condition associated with the user (U).

3. A system (10) according to claim 2, further comprising a position identifying unit (30) configured to determine said current position and optionally said motion condition associated with the user (U).

4. A system (10) according to any previous claim, wherein said booking platform connecting module (40) further comprises at least one two-layers authentication unit (44a-44d), configured to connect a respective booking platform (16) to the system (10), and the system (10) to said at least one social networking medium (18), thereby creating a tunnel between the booking platform (16) and said at least one social networking medium (18).

5. A system (10) according to any previous claim, wherein said social networking media connecting module (60) further comprises an identity management unit (66) configured to: create a Top Level Identity for the user (U); associate different Social Network Identities, used by the user (U) for accessing the system (10), with the Top Level Identity; and store into the database (20) the Top Level Identity with the Social Network Identities associated thereto.

6. A system (10) according to any previous claim, wherein the user experience is a user journey and the system (10) further comprises a geographic analysing unit (50) configured to associate the user journey with journeys of user contacts (C) having a departure point, a destination point and/or at least one intermediate point in common with the user journey.

7. A method for processing data about user experiences comprising:
- connecting to at least one social networking medium (18) for retrieving information about contacts (C) of the user (U) on said at least social networking medium (18), and storing the retrieved information into a database (20); and upon a user (U) access command:
- connecting to at least one booking platform (16) for searching options matching predetermined searching criteria;
- showing the user (U) retrieved options, if any;
- comparing at least one of the retrieved options with information about experiences stored in the database (20) in order to identify user contacts (C) on said at least one social networking medium (18), who planned an experience matching the at least one of the retrieved options; and
- showing the user (U) information about the identified user contacts (C), if any.

8. A method according to claim 7, comprising:
- receiving from the user (U) a selection command for selecting one of said shown retrieved options;
- connecting to said at least one social networking medium (18) to enable the user (U) to share with his contacts (C) on said at least one social networking medium (18) the selected option as an experience.

9. A method according to claim 7 or 8, wherein: said predetermined searching criteria are received from the user (U), the comparing is performed on all the retrieved options, if any, and said all retrieved options are shown to the user (U) together with the information about the identified user contacts (C), if any.

10. A method according to claim 7 or 8, wherein: said predetermined searching criteria are current position and time or current position, time and motion condition associated with the user (U), the comparing is performed on one of the retrieved option selected by the user (U), and information about the identified user contacts (C) associated with said selected retrieved option, if any, is shown to the user (U).

11. A method according to any previous claim 7 to 10, wherein the user access command is received through one of the booking platforms (16) and a tunnel is created between the booking platform (16) and said at least one social networking medium (18).

12. A method according to any claim 7 to 11, comprising:
- receiving a Social Network Identity upon said access user command;
- determining if the received Social Network Identity is already associated with a Top Level Identity in the database (20);
- in the negative case, determining if a Top Level Identity is already associated with the user (U) in the database (20);
- in the affirmative case, associating the received Social Network Identity with the Top Level Identity already associated with the user (U) in the database (20);
- in the negative case, creating a Top Level Identity for the user (U) and associating it with the received Social Network Identity.

13. A method according to any previous claim 7 to 12, wherein: the user experience is a journey, the predetermined searching criteria are entered by the user (U) and comprise a departure point and a destination point of the journey, and the method comprises:
- comparing the departure and destination points of the journey with the departure, destination and potential intermediate points of mother routes, if any, stored in the database (20);
- determining whether the journey has at least one point in common with the departure, destination and intermediate points of the mother routes;
- in the negative case, identifying and storing within the database (20) the journey as a new mother route;
- in the affirmative case, asking the user (U) if the journey is on one of the mother routes identified at the determining step;
- in the negative case, identifying and storing within the database (20) the journey as a new mother route;
- in the affirmative case, identifying the journey as a daughter route of the identified mother route and storing it within the database (20).

14. A method according to claim 13, wherein if the journey is on one of the mother routes identified at the determining step, the method further comprises:
- selecting the mother route on which the journey is positioned;
- asking the user (U) if the departure point or destination point of the journey is external to the selected mother route;
in the affirmative case:
- if the external point of the journey is the departure point, identifying and storing within the database (20) the departure point of the journey as new departure point of the selected mother route;
- if the external point of the journey is the destination point, identifying and storing within the database (20) the destination point of the journey as new destination point of the selected mother route.

15. A method according to claim 13 or 14, wherein for each mother route stored in the database (20), the method comprises:
- determining a theoretical beeline connecting the departure point and the destination point of the mother route;
- determining an area of divergence from the theoretical beeline;
- determining potential intermediate points on the mother route within the area of divergence from the theoretical beeline; and
- categorizing and storing in the database (20) each determined potential intermediate point as a potential intermediate point on the mother route.
